# EUROPEAN PATENT SPECIFICATION

(11) **EP 1 544 438 B1**
(45) Date of publication and mention of the grant of the patent: **26.02.2014**
(21) Application number: 04029863.0
(22) Date of filing: 16.12.2004
(51) Int. Cl.: F02D 11/10, F02M 25/07, F16K 31/04, F02B 31/06

(54) **Supporting device for actuator received in housing**
Trägervorrichtung für Antrieb im Gehäuse
Dispositif de support pour actionneur dans boîtier

(30) Priority: 19.12.2003 JP 2003423529
(43) Date of publication of application: 22.06.2005
(73) Proprietor: DENSO CORPORATION, Kariya-city, Aichi-pref. 448-8661 (JP)
(72) Inventor: Nanba, Kunio, Kariya-city Aichi-pref., 448-8661 (JP); Maeda, Kazuto, Kariya-city Aichi-pref., 448-8661 (JP); Hashimoto, Koji, Kariya-city Aichi-pref., 448-8661 (JP); Sakai, Tatsuo, Kariya-city Aichi-pref., 448-8661 (JP)
(74) Representative: TBK

(56) References cited:
- EP-A2- 1 420 158
- WO-A1-2005/049991
- DE-A1- 4 342 949
- JP-A- 2001 346 351
- US-A- 5 979 405
- US-A1- 2002 171 059

## Description

The present invention relates to a supporting device that resiliently holds an internal component such as an actuator received in a housing to damp vibration transferred to the actuator.

Specifically, the present invention relates to a supporting device, in which a plate-shaped resilient member is provided to enhance vibration-proofing performance of an actuator such as a motor. The actuator operates a shaft in a rotating direction or an axial direction, so that the shaft integrally moves with a valve body of a flow control valve.

Conventionally, a butterfly valve is used as a valve body of a flow control valve to control a flow amount of fluid. A butterfly valve is used in a throttle control apparatus for an internal combustion engine according to JP-A-10-252510.

The throttle control apparatus includes a butterfly valve and a shaft. The butterfly valve controls intake air that flows into each cylinder of the engine in a vehicle, such as an automobile. The shaft integrally rotates with the butterfly valve. The shaft is driven by an actuator such as a motor via a gear transmission device.

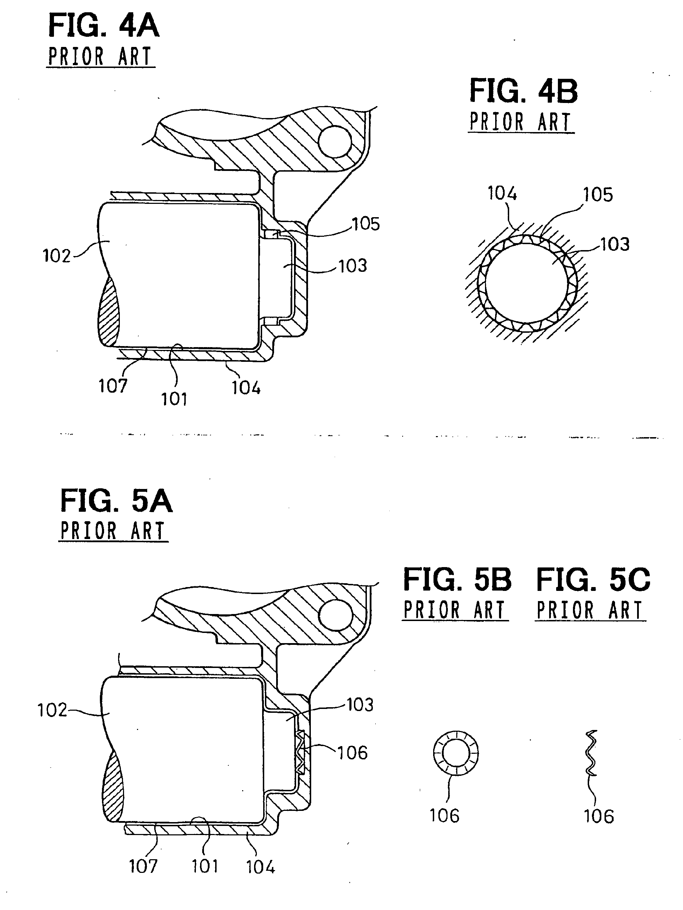

An actuator is inserted into a cylindrical housing, and the front end portion of the actuator is secured to the housing using a screw to enhance vibration-proofing performance of the actuator. As shown in FIGS. 4A, 4B, a motor 102 is inserted into a motor receiving hole 101 through a motor inserting hole. A protruding small-diameter portion 103 is provided to the rear end portion of the motor 102. An annular plate-shaped resilient member 105 is provided into a gap formed between the outer circumferential periphery of the protruding small-diameter portion 103 and the inner circumferential periphery of the sidewall of a housing 104. The plate-shaped resilient member 105 resiliently holds the protruding small-diameter portion 103 of the motor 102 in the radial direction. Alternatively, as shown in FIGS. 5A to 5C, a plate-shaped resilient member 106 is provided into a gap axially formed between the rear end face of the protruding small-diameter portion 103 of the motor 102 and an axial face of the bottom wall of the housing 104. The plate-shaped resilient member 106 resiliently holds the protruding small-diameter portion 103 of the motor 102 in the thrust direction.

As shown in FIGS. 4A to 5C, vibration can be restricted in one of the radial direction or the thrust direction of the motor 102 in the conventional structure. However, an engine actually vibrates in both the radial direction and the thrust direction of the motor 102. Therefore, antivibration effect cannot be sufficiently produced by only one of the radial direction and the thrust direction.

Referring back to FIGS. 5A to 5C, the plate-shaped resilient member 106 is assembled into the gap axially formed between the rear end face of the protruding small-diameter portion 103 of the motor 102 and the bottom face of the bottom wall of the housing 104. In this structure, the plate-shaped resilient member 106 is set at a predetermined position of the bottom face of the bottom wall of the motor receiving hole 101. Subsequently, the motor 102 is assembled into the motor receiving hole 101 in a condition, in which the plate-shaped resilient member 106 is hidden by a largest diametrical portion (diametrically large portion) of the motor 102. Therefore, it is difficult to confirm whether the plate-shaped resilient member 106 is properly set at a predetermined assembling position of the motor 102 and a predetermined assembling position of the housing 104, after the motor 102 is assembled into the housing 104.

Furthermore, a supporting device according to the preamble of claim 1 is known from US 2002/0171059 A1. Further supporting devices are disclosed in JP 2001 346 351 A and DE 43 42 949 A1.

In view of the foregoing problems, it is an object of the present invention to produce an actuator apparatus, in which a radially supporting member and an axially supporting member are integrally formed with a resilient member, which is inserted in a gap formed between an actuator and a housing. The radially supporting member resiliently supports the sidewall of the actuator in the radial direction. The thrust direction supporting member resiliently supports the end face of the actuator in the axial direction. Thus, vibration-proofing performance of the actuator can be significantly enhanced.

According to the present invention, the above object is solved with a supporting device having the features of claim 1.

The above and other objects, features and advantages of the present invention will become more apparent from the following detailed description made with reference to the accompanying drawings. In the drawings:
FIG. 1 is a partially cross-sectional side view showing an exhaust-gas recirculation apparatus receiving a motor according to a first embodiment of the present invention.
FIG. 2 is a perspective view showing an antivibration spring that is assembled to a rear end portion of the motor according to the first embodiment.
FIG. 3A is a front view showing the antivibration spring, and FIG. 3B is a side view showing the antivibration spring according to the first embodiment.
FIG. 4A is a partially cross-sectional side view showing an antivibration structure of a motor, and FIG. 4B is a partially cross-sectional front view showing a plate-shaped resilient member according to a prior art.
FIG. 5A is a partially cross-sectional side view showing an antivibration structure of a motor, FIG. 5B is a front view showing a plate-shaped resilient member, and FIG. 5C is a side view showing the plate-shaped resilient member according to a prior art.

### (First Embodiment)

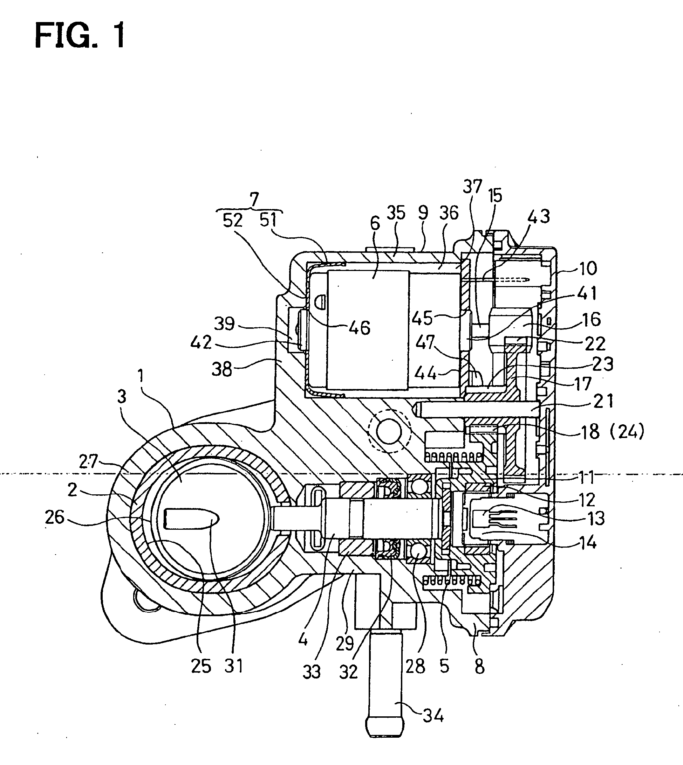

As shown in FIGS. 1 to 3B an exhaust-gas recirculation apparatus includes a valve housing 1, a butterfly valve 3, a valve shaft 4, a coil spring 5, a motor 6, a power unit, and an engine control unit. The valve housing 1 is connected to an exhaust pipe of an internal combustion engine, so that the valve housing 1 partially constructs a recirculation pipe of exhaust gas, in which an exhaust-gas recirculation passage (fluid passage) 25 is formed. Exhaust gas (exhaust recirculation gas, EGR gas) is partially recycled into an intake pipe through the exhaust-gas recirculation passage 25. The butterfly valve 3, which is a valve body of the flow control valve, is received in the valve housing 1 such that the butterfly valve (valve) 3 is capable of opening and closing the exhaust-gas recirculation passage 25. The valve shaft 4 rotates integrally with the valve 3 in the rotating direction. The valve shaft 4 is included in the flow control valve (EGR control valve) that controls a recycling flow amount of exhaust gas. The coil spring (return spring) 5 urges the valve 3 of the EGR control valve in the direction, in which the valve 3 closes the exhaust-gas recirculation passage 25. The motor (actuator) 6 rotates the valve 3 of the EGR control valve in the direction, in which the valve 3 opens the exhaust-gas recirculation passage 25. Alternatively, the motor 6 rotates the valve 3 in the direction, in which the valve 3 closes the exhaust-gas recirculation passage 25. The power unit includes a power transmission device that transmits rotation power of the motor 6 to the valve shaft 4. The engine control unit (ECU) electronically controls the motor 6 of the power unit. An antivibration spring 7 is inserted between the valve housing 1 and the motor 6 to enhance vibration-proofing performance of the motor 6.

The exhaust-gas recirculation apparatus converts opening degree of the valve 3 to an electronic signal. The exhaust-gas recirculation apparatus has an EGR amount sensor that transmits an amount of EGR gas, which is contained in intake air flowing through the intake pipe, to the ECU. That is, the EGR amount sensor transmits a recirculation amount (EGR amount) of EGR gas, which flows into the intake pipe, to the ECU. Electric power transmitted to the motor 6 is feed back controlled, so that a set amount of EGR, i.e., target degree of valve opening set by the ECU substantially coincides with a detection amount of EGR, i.e., actual degree of valve opening. The detection amount of EGR is detected by the EGR amount sensor. Electric power transmitted to the motor 6 is preferably operated using a duty (DUTY) control. That is, a ratio (energizing ratio, duty ratio) between ON and OFF of control pulse signals per unit of time is controlled in accordance with deviation between the set amount of EGR (target degree of valve opening) and the detection amount of EGR (actual degree of valve opening). Thus, opening degree of the valve 3 of the EGR control valve is operated by the duty control.

The EGR amount sensor includes a rotor 11, divided-type permanent magnets (not shown), divided-type yokes (magnetic body) 12, hall elements 13, a terminal (not shown), and a stator 14. The rotor 11 is made of a nonmetal material such as a resinous material having a substantially U-shaped cross-section. The rotor 11 is secured to an end portion of the valve shaft 4 of the EGR control valve on the right side in FIG. 1. Each divided-type permanent magnet is formed in a substantially rectangular-shape to be a magnetic source. Each divided-type yoke 12 is formed in a substantially arc shape to be magnetized by the permanent magnet. Each hall element 13 is integrally provided to the side of the sensor cover 10 such that the multiple hall element 13 opposes to the corresponding divided-type permanent magnet. The terminal (not shown) is made of a conductive metallic thin plate that electrically connects the hall elements 13 and the ECU, which is externally provided. The stator 14 is made of a magnetic material such as a ferrous material, and the stator 14 concentrates magnetic flux to the hall element. The divided-type permanent magnet and the divided-type yoke 12 are secured to the inner circumferential periphery of the rotor 11 using glue or the like. The rotor 11 is insert-formed in the valve-side gear 18, which partially constructs the power transmission device. The divided-type permanent magnets having the substantially rectangular shape are arranged in the vertical direction in FIG. 1. Specifically, N pole of each magnet is arranged on the upper side in FIG. 1, and S pole of each magnet is arranged on the lower side in FIG. 1. The same poles of the divided-type permanent magnets are respectively arranged on the same side. The hall elements 13 serve as a noncontacting detecting element. The hall elements 13 are arranged in the inner circumferential periphery of the permanent magnets to oppose to each other. When magnetic field of N pole or magnetic field of S pole is detected on the detecting face of the hall elements 13, the hall elements 13 generate electromotive force corresponding to the magnetic field. Specifically, when magnetic force of N pole is detected, the hall elements 13 generate + voltage, and when magnetic force of S pole is detected, the hall elements 13 generate - voltage.

The power unit includes the motor 6 and the power transmission device, i.e., the reduction gear device. The motor 6 drives the valve shaft 4 of the EGR control valve in the rotating direction. The power transmission device transmits rotation power of the motor 6 to the valve shaft 4 of the EGR control valve. The motor (D.C. motor) 6 is integrally connected with an electric terminal embedded in the sensor cover 10. When the motor 6 is energized, the motor shaft 15 is rotated. The reduction gear device reduces rotation speed of the motor shaft 15 of the motor 6 at a predetermined reduction ratio. The reduction gear device includes a pinion gear 18, a middle reduction gear 17 and a valve side gear 18. The reduction gear device serves as a valve driving means that rotates the valve shaft 4 of the EGR control valve. The pinion gear 18 is secured to the outer circumferential periphery of the motor shaft 15 of the motor 6. The middle reduction gear 17 engages with the pinion gear 16, so that the middle reduction gear 17 is rotated by the pinion gear 16. The valve side gear 18 engages with the middle reduction gear 17, so that the valve side gear 18 is rotated by the middle reduction gear 17. The pinion gear 16 is formed of a metallic material to be in a predetermined shape. The pinion gear 16 is a motor-side gear that integrally rotates with the motor shaft 15 of the motor 6.

The middle reduction gear 17 is formed of resin to be in a predetermined shape. The middle reduction gear 17 rotatably engages with the outer circumferential periphery of a supporting shaft 21 that serves as a rotation center. A large-diameter gear 22 and a small-diameter gear 23 are provided to the middle reduction gear 17. The large-diameter gear 22 engages with the pinion gear 16. The small-diameter gear 23 engages with the valve side gear 18. The pinion gear 16 and the middle reduction gear 17 serve as a torque transmitting means that transmits torque of the motor 6 to the valve side gear 18. One axial end portion of the supporting shaft 21, which is on the right side in FIG. 1, fits to a recessed portion formed in the inner wall face of the sensor cover 10. The other end portion of the supporting shaft 21, which is on the left side in FIG. 1, is press-inserted into a recessed portion formed in the bottom wall face of a gear case 8 that forms an outer wall face of the valve housing 1. The valve side gear 18 is formed of resin to be in a predetermined substantially annular shape. A gear portion 24 is integrally formed on the outer circumferential face of valve side gear 18. The gear portion 24 engages with the small-diameter gear 23 of the middle reduction gear 17. The coil spring 5 is provided between the bottom wall face of the gear case 8 and the end face of the valve side gear 18 on the left side in FIG. 1 in the exhaust-gas recirculation apparatus. The rotor 11 is integrally formed of a nonmetallic material such as a resinous material on the diametrically inner side of the valve side gear 18.

The EGR control valve includes the valve housing 1, the nozzle 2, the valve 3, the valve shaft 4, and the like. The valve housing 1 forms the exhaust-gas recirculation passage 25, through which exhaust gas emitted from the engine is partially recycled to the air intake side. The nozzle 2 has a cylindrical shape that fits to the valve housing 1, so that the nozzle 2 is supported by the valve housing 1. The valve 3 has a substantially circular plate shape. The valve 3 is received in the nozzle 2 such that the valve 3 is capable of rotating in a rotation angular range between the full-open position and the full-close position to control opening degree or the opening area of the exhaust-gas recirculation passage 25 formed in the nozzle 2. The valve shaft 4 rotates integrally with the valve 3 in the rotating direction. When the EGR control valve is in the full-open position, the sealing face of the seal ring 26 of the valve 3 tightly contacts with the face of the seat provided to the nozzle 2. Thus, the inner circumferential periphery of the nozzle 2 and the outer circumferential periphery of the valve 3 are airtightly sealed by elasticity of the seal ring 26 of the valve 3 in the radial direction of the valve 3.

The valve housing 1 rotatably supports the valve 3 in the exhaust-gas recirculation passage 25 formed in the nozzle 2 such that the valve 3 is capable of rotating from the full-close position to the full-open position in the rotating direction. The valve housing 1 is secured to an exhaust-gas recirculation pipe or an air intake pipe of the engine using a screw (not shown) such as a bolt. A nozzle-fitting portion 27 is integrally formed with the valve housing 1. The nozzle-fitting portion 27 fits to the nozzle 2, so that the nozzle-fitting portion 27 internally supports the nozzle 2. The nozzle 2 has a cylindrical shape, in which the valve 3 is received, such that the valve 3 is capable of opening and closing inside the nozzle 2. A shaft-bearing portion 29 is integrally formed with the nozzle 2 and the nozzle-fitting portion 27 such that the shaft-bearing portion 29 rotatably supports one end portion of the valve shaft 4 on the right side in FIG. 1 via a bearing 28. Here, the valve housing 1 is die-cast of aluminum alloy.

The valve 3 is formed of a thermo resistive material, which is resistive to high temperature, such as stainless steel. The valve 3 is formed in the substantially circular plate shape. The valve 3 is a butterfly-shaped rotary valve, i.e., butterfly valve that controls an EGR amount of EGR gas that is mixed with intake air flowing through the air intake pipe. The valve 3 is secured to the tip end side of the valve shaft 4, so that the valve 3 is supported by the valve shaft 4. The valve shaft 4 is integrally formed of a thermo resistive material such as stainless steel. The valve shaft 4 has a valve mounting portion 31, to which the valve 3 is secured using a securing means such as glue, so that the valve 3 is supported by the valve shaft 4. The valve shaft 4 is rotatably supported by the shaft-bearing portion 29 such that the valve shaft 4 is slidable relative to the shaft-bearing portion 29. The end portion of the valve shaft 4 on the right side in FIG. 1 has a crimped portion, to which the valve side gear 18 and the rotor 11 are secured using a securing means such as crimping. The crimped portion is integrally formed with the end portion of the valve shaft 4. The valve side gear 18 is one of components of the power transmission device. The rotor 11 is one of the components of the EGR amount sensor. An oil seal 32 and a bushing 33 are provided between the outer circumferential periphery of the valve shaft 4 and the inner circumferential periphery of the shaft-bearing portion 29.

The gear case 8 is integrally formed with the outer wall portion of both the nozzle-fitting portion 27 and the shaft-bearing portion 29 on the right side in FIG. 1. The gear case 8 has a recessed shape such that the gear case 8 rotatably receives the power transmission device of the power unit. A motor housing 9 is integrally formed with the outer wall portion of both the nozzle-fitting portion 27 and the shaft-bearing portion 29 on the upper side in FIG. 1. The motor housing 9 has a recessed shape such that the motor housing 9 receives the motor 6 of the power unit. The valve housing 1 is connected with a cooling water pipe 34, through which engine cooling water, i.e., hot water flows into a hot water circulating passage (not shown) and a cooling water pipe (not shown), through which hot water flows from the hot water circulating passage. The hot water circulating passage is formed around the exhaust-gas recirculation passage 25 in the vicinity of the full close position of the valve or the nozzle-fitting portion 27 in the inner periphery of the nozzle 2, for example. Temperature of hot water is within a predetermined temperature range such as a range between 75 and 80°C.

The sensor cover 10 is provided to both the opening side of the gear case 8 of the valve housing 1 and the opening of the motor housing 9, i.e., the insertion hole of the motor, in order to cover both the opening sides of the gear case 8 and the motor housing 9. The sensor cover 10 is formed of thermoplastic that electrically insulate among the terminals of the EGR amount sensor from each other. The sensor cover 10 has an engaged portion (connecting end face) that is engaged with an engaging portion (connecting end face) formed around both the openings of the gear case 8 and the motor housing 9. The sensor cover 10 is airtightly assembled to the engaging portion formed around the opening of the gear case 8 using a rivet (not shown), a screw (not shown) or the like. The nozzle 2 is formed of a thermo resistive material such as stainless steel, as well as the valve shaft 4. The nozzle 2 is formed in a cylindrical shape.

The motor housing 9 has a substantially cylindrical inner sidewall portion 35. A motor receiving hole 36 is formed in the inner sidewall portion 35 to receive the motor 6. The motor receiving hole 36 is formed substantially perpendicularly to the center axis of the exhaust-gas recirculation passage 25 formed in the nozzle 2. The motor receiving hole 36 has an opening end (opening, motor insertion hole) 37 on one end side in a direction, which is substantially perpendicular to the center axis of the exhaust-gas recirculation passage 25. Besides, the motor receiving hole 36 has a closed end portion (bottom wall portion) 38 on the other end side in a direction, which is substantially perpendicular to the center axis of the exhaust-gas recirculation passage 25. A substantially circular motor engaging groove (recessed portion) 39 is formed in the bottom wall of the bottom wall portion 38.

The motor 6 is an electrically driven actuator (driving source) that rotates the motor shaft 15 in the forward direction or in the reverse direction, when the motor 6 is energized. The motor 6 rotates the valve 3 and the valve shaft 4 of the EGR control valve in the opening direction (or the closing direction) via the reduction gear device. The motor 6 is inserted into the motor receiving hole 36 through the motor insertion hole 37, so that the motor 6 is received in the motor housing 9.

The motor 6 has a radially side face portion (most outer radial portion, radial portion) that is spaced from the inner wall face of the inner sidewall portion 35 of the motor housing 9 by a predetermined distance. The motor 6 has an axially end face portion (thrust portion) that is arranged between the bottom face of the bottom wall portion 38 of the motor housing 9 and the motor 6 via the antivibration spring 7. A cylindrical bearing holder (annular engaged portion, first small-diameter protrusion) 41 is integrally formed on the front end face of the front end portion (front side portion) of the motor 6. The first small-diameter protrusion 41 receives a bearing such as a ball bearing (not shown) that rotatably supports the one end portion (front end portion) of the motor shaft 15. A cylindrical bearing holder (annular engaged portion, second small-diameter protrusion) 42 is integrally formed with the rear end face of the rear end portion (rear side portion) of the motor 6. The small-diameter protrusion 42 has the diameter that is smaller than a diameter of an axially intermediate portion of the actuator 6. The second small-diameter protrusion 42 receives a bearing such as a ball bearing (not shown) that rotatably supports the other end portion (rear end portion) of the motor shaft 15.

An electric terminal (terminal) 43 protrudes from the front end portion of the motor 6. The terminal 43 is electrically connected with a motor external connecting terminal (not shown) that is embedded in the sensor cover 10. The first small-diameter protrusion 41 forms a circular protrusion that is located at one end portion (one end face) of a front frame of the motor 6 in the thrust direction, i.e., axial direction of the motor 6. The first small-diameter protrusion 41 engages with a motor engagement hole 45 formed in a metallic plate 44, so that the first small-diameter protrusion 41 is supported by the motor engagement hole 45 of the metallic plate 44. The second small-diameter protrusion 42 forms a circular protrusion that is located at the other end portion (the other end face) of a rear frame of the motor 6 in the thrust direction of the motor 6. The second small-diameter protrusion 42 engages with a motor engagement hole 46 formed in the antivibration spring 7 and the motor engaging groove 39 formed in the bottom wall portion 38 of the motor housing 9, so that the second small-diameter protrusion 42 is supported by the motor engagement hole 46 and the motor engaging groove 39. The metallic plate 44 is secured to the motor housing 9 using a screw 47.

As shown in FIG. 1, the antivibration spring 7 serves as a plate-shaped resilient member. The antivibration spring 7 includes a radial supporting portion 51, a thrust supporting portion 52, and a motor-engagement supporting portion (annular engagement portion, motor securing portion) 53. The radial supporting portion 51 resiliently supports the radially side face portion of the motor 6 in the radial direction of the motor 6. The thrust supporting portion 52 resiliently supports the axially end face (axially end face portion) of the motor 6 in the thrust direction. The motor-engagement supporting portion 53 has a substantially annular shape such that the motor-engagement supporting portion 53 engages with the outer circumferential periphery of the second small-diameter protrusion 42 of the motor 6. A plate, which is made of metal such as stainless steel or spring steel, is stamped to be the antivibration spring 7 such that the radial supporting portion 51, the thrust supporting portion 52, and the motor-engagement supporting portion 53 are integrally formed. The antivibration spring 7 has connecting portions (base portions) 54 that connect the radial supporting portion 51, the thrust supporting portion 52, and the motor-engagement supporting portion 53. The connecting portions 54 of the antivibration spring 7 are arranged on the insertion side in the assembling direction, i.e., on the rear side of the motor 6 with respect to the motor housing 9 (FIG. 1). The motor 6 is inserted into the motor receiving hole 36 of the motor 6 along the assembling direction.

Specifically, the motor 6 is inserted into the motor housing 9 through the motor insertion hole 37 of the motor housing 9 along a substantially axial direction of the motor 6. The connecting portion 54 is arranged on the opposite side as the motor insertion hole 37 of the motor housing 9 with respect to the motor 6 in the direction, in which the motor 6 is inserted into the motor housing 9 when the motor 6 is received in the motor housing 9. That is, the connecting portion 54 is arranged on the side of the axially end face portion of the motor 6 in the axial direction of the motor 6.

The radial supporting portion 51 is connected with the outer circumferential periphery of the connecting portion 54 via a fixed end portion. The radial supporting portion 51 outwardly extends in a substantially radial direction of the motor 6 such that the radial supporting portion 51 has plurality of free end portions on the opposite side as the fixed end portions in the axial direction of the motor 6. The fixed end portion is circumscribed by a circle that has a diameter, which is less than the diameter of an incircle of the motor housing 9. The free end portions are circumscribed by a circle that has a diameter, which is greater than the diameter of the incircle of the motor housing 9. The free end portions of the radial supporting portion 51 are circumferentially separated from each other.

As shown in FIGS. 1 to 3B, the radial supporting portion 51 is radially inserted into a gap formed between the outer circumferential periphery of the radially side face portion of the motor 6 and the inner circumferential periphery of the inner sidewall portion 35 of the motor housing 9.

The radial supporting portion 51 includes multiple second resilient supporting pieces 61 that are capable of resiliently deforming in the radial direction of the motor 6. A hook-shaped second contacting portion 61a is formed on each free end side of each first resilient supporting piece 61. The second contacting portion 61a resiliently contacts with the inner circumferential periphery of the inner sidewall portion 35 of the motor housing 9 or the outer circumferential periphery of the radially side face portion of the motor 6. The multiple second resilient supporting pieces 61 respectively have bent portions 61c. The second resilient supporting pieces 61 radially outwardly extend from the radial supporting portion 51. The second resilient supporting pieces 61 and the hook-shaped second contacting portions 61a are arranged in a substantially circumferential direction of the radial supporting portion 51.

Here, a diameter of a circumscribed circle formed by the outer circumferential periphery of the bent portions 61c on the fixed end side, i.e., on the side of the connecting portions 54 (insertion side) is set to be smaller than the inner diameter of the inner sidewall portion 35 of the motor housing 9. A diameter of a circumscribed circle formed by the outer circumferential periphery of the bent portions 61c on the free end side, which is on the opposite side as the fixed end side, is set to be larger than the inner diameter of the inner sidewall portion 35 of the motor housing 9.

The free end sides of the multiple second resilient supporting pieces 61 extend from the fixed end side, which is on the side of the connecting portions 54, to the one side (e.g., front side) via radial portions 61b and the bent portions 61c in the axial direction. The multiple second resilient supporting pieces 61 are arranged along the circumferential direction of the radially side face portion of the motor 6 at predetermined intervals (regular intervals: e.g. 120° apart).

The thrust supporting portion 52 is inserted in the gap formed between the axially end face portion of the motor 6 and the bottom wall face of the bottom wall portion 38 of the motor housing 9. The thrust supporting portion 52 includes multiple first resilient supporting pieces 62 that are capable of resiliently deforming in the thrust direction of the motor 6. Each of the first resilient supporting pieces 62 has a first contacting portion 62a on the free end side. The first contacting portion 62a resiliently contacts with either the bottom wall face of the bottom wall portion 38 of the motor housing 9 or the rear end face of the axially end face portion of the drive motor 6.

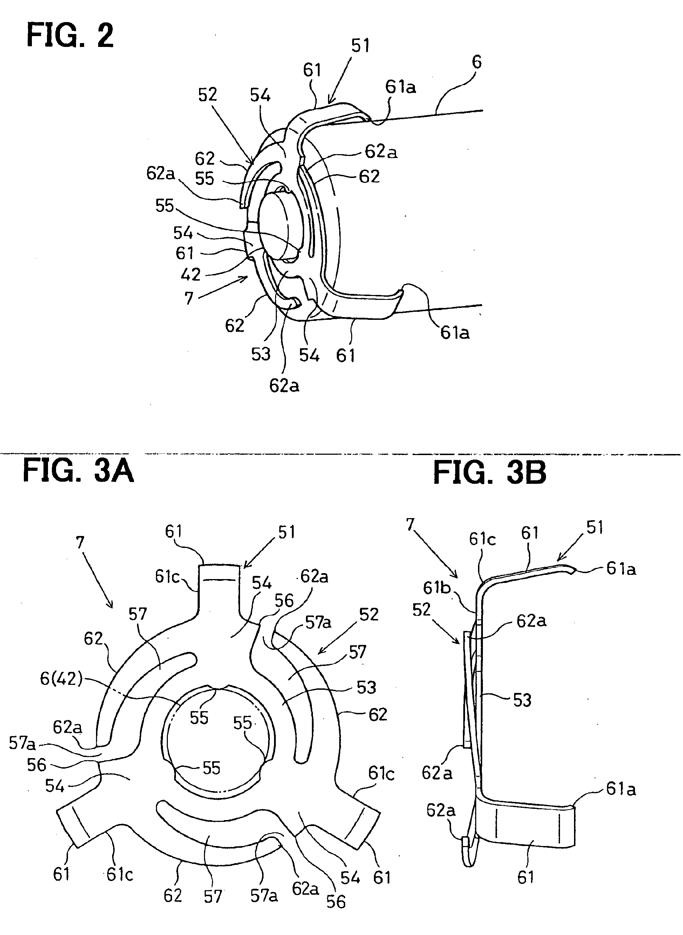

Each of the multiple first resilient supporting pieces 62 on the free end side extends from the fixed end side to at least one side in the substantially circumferential direction (e.g., left-hand direction in FIG. 3A) to be in a substantially arc-shape. The fixed end side of the first resilient supporting piece 62 is located on the side of a relatively rigid portion (connecting portions 54) located between the radial supporting portion 51 and the motor-engagement supporting portion 53.

Multiple, e.g., three protrusions 55 protrude from the inner circumferential portion of the motor-engagement supporting portion 53 to the substantially center portion of the motor-engagement supporting portion 53. The protrusions 55 are arranged at predetermined intervals, e.g., regular intervals such as 120° apart. The protrusions 55 partially hold the outer circumferential periphery of the second small-diameter protrusion 42 of the motor 6. Each protrusion 55 protrudes from a substantially center portion of the antivibration spring 7 in the radial direction. The protrusion 55 is arranged on the centerline of each radial supporting portion 51. Specifically, each protrusion 55 protrudes substantially along the centerline of the radial supporting portion 51. Acute protrusions 56 are respectively provided to the connecting portions 54 on the circumferentially opposite side as the direction, in which each thrust supporting portion 52 protrudes. The acute protrusions 56 enhance rigidity of the connecting portion 54. The motor engagement hole 46 (FIG. 1) is formed in the motor-engagement supporting portion 53. Slit portions 57 (FIG. 3A, 3B) are respectively formed between the outer circumferential periphery of the motor-engagement supporting portion 53 and each first resilient supporting piece 62 of the thrust supporting portions 52. Each slit portion 57 has a substantially arc-shape. The slit portion 57 has an opening portion 57a that separates each acute protrusion 56 of the connecting portion 54 from each free end of the first resilient supporting piece 62 of the thrust supporting portion 52.

Next, an effect of the exhaust-gas recirculation apparatus in this embodiment is concisely described in accordance with FIG. 1. For example, an engine, such as a diesel engine starts, and an intake valve of an intake port, which is provided to a cylinder head of the engine, is opened. Intake air, which is filtered by an air cleaner, is distributed to an intake manifold connected to each cylinder after passing through an intake pipe and a throttle body. Subsequently, the intake air is drawn into each cylinder of the engine. The intake air is compressed in the engine, so that temperature of the compressed air increases to be higher than temperature that is sufficient for burning fuel. Fuel is injected into the high temperature air in the engine, so that combustion is generated. Combustion gas in each cylinder is discharged from each exhaust port of each cylinder head, and is exhausted through en exhaust manifold and an exhaust pipe. In this situation, the motor 6 is energized by the ECU, so that the motor shaft 15 of the drive motor 6 is rotated such that opening degree of the valve 3 of the EGR control valve is controlled at a predetermined degree.

The motor shaft 15 rotates, and the pinion gear 46 rotates, so that torque is transmitted to the large-diameter gear 22 of the middle reduction gear 17. As the large-diameter gear 22 rotates, the small-diameter gear 23 rotates around the supporting shaft 21, so that the valve side gear 18, which has the gear portion 24 engaging with the small-diameter gear 23, rotates. Thus, the valve side gear 18 rotates around the valve shaft 4, so that the valve shaft 4 rotates by a predetermined rotation angle, and the valve 3 of the EGR control valve rotates in a direction (opening direction) from the full-close position to the full-open position. Exhaust gas in the engine partially flows into the exhaust-gas recirculation passage 25 formed in the nozzle 2 of the valve housing 1 through the exhaust-gas recirculation pipe. Exhaust gas, which flows into the exhaust-gas recirculation passage 25 as EGR gas, flows into an air intake passage of the air intake pipe, and the EGR gas is mixed with intake air flowing from the air cleaner.

An amount of EGR gas is feedback controlled such that the amount of EGR gas is maintained at a predetermined amount in accordance with signals detected by an intake airflow sensor (airflow meter), an intake-air temperature sensor and the EGR amount sensor. Intake air is drawn into each cylinder after passing through the air intake pipe. EGR gas is recycled from the exhaust pipe into the air intake pipe through the exhaust-gas recirculation passage 25. Intake air is mixed with EGR gas to reduce emission. Opening degree of the valve 3 of the EGR control valve is linearly controlled such that an amount of EGR gas becomes an EGR amount set for each engine operating condition.

When the valve 3 is in the full-open position, initially, the valve shaft 4 is returned to an initial position by rotation power of the motor 6 or resilience of the coil spring 5. Therefore, the valve 3 closes in the closing direction, in which the valve 3 is rotated from the full-open position to the full-close position. The sealing face of the seal ring 26 is mounted in a circumferential groove formed in the outer circumferential periphery of the valve 3. The sealing face of the seal ring 26 is pressed onto the face of the seat of the nozzle 2 by elastic force applied from the seal ring 26 in the radial direction, so that the sealing face of the seal ring 26 tightly contacts with the face of the seat of the nozzle 2. Therefore, the inner circumferential periphery of the nozzle 2 and the outer circumferential periphery of the valve 3 can be airtightly sealed in an air proof condition, so that EGR gas does not intrude into the air intake passage of the intake pipe.

Next, an assembling method of the motor 6 is concisely described in accordance with FIGS. 1 to 3B. When the motor 6 is assembled into the motor receiving hole 36 of the motor housing 9, the antivibration spring 7 is attached to the rear end portion of the motor 6, in the first place. Specifically, the protrusions 55 of the motor-engagement supporting portion 53 of the antivibration spring 7 is tightly engaged with the outer circumferential periphery of the second small-diameter protrusion 42 of the rear end portion (axially end face portion) of the motor 6. Thus, each first resilient supporting piece 61 of the radial supporting portion 51 of the antivibration spring 7 is arranged along the radially side face portion of the motor 6. Besides, each first resilient supporting piece 62 of the thrust supporting portion 52 of the antivibration spring 7 is arranged along the axially end face portion of the motor 6.

In this situation, each of the second contacting portions 61a of the multiple second resilient supporting pieces 61 of the radial supporting portion 51 may be radially spaced from the radially side face portion of the motor 6. Each of the first contacting portion 62a of the multiple first resilient supporting piece 62 of the thrust supporting portion 52 may be axially spaced from the axially end face portion of the motor 6. The antivibration spring 7 is attached to the rear end portion of the motor 6, and the motor 6 is inserted into the motor receiving hole 36 of the motor housing 9 through the motor insertion hole 37. The metallic plate 44 has the motor engagement hole 45, to which the first small-diameter protrusion 41 (FIG. 1) of the motor 6 engages. The metallic plate 44 is secured to the motor housing 9 using the screw 47, so that the motor 6 is steadily supported in the motor receiving hole 36 of the motor housing 9. The antivibration spring 7 is inserted between the rear end portion of the motor 6 and the motor housing 9.

That is, as shown in FIG. 1, the second contacting portions 61a of the second resilient supporting pieces 61 of the radial supporting portion 51 resiliently contacts with the inner wall face of the inner sidewall portion 35 of the motor housing 9. Thus, the motor 6, which is held by the motor engagement hole 46 of the antivibration spring 7, is resiliently supported in the motor receiving hole 36 of the motor housing 9, such that the centerline of the motor receiving hole 36 substantially coincides with the centerline of the motor 6.

Each of the first contacting portion 62a of the first resilient supporting piece 62 of the thrust supporting portion 52 resiliently contacts with the bottom wall face of the bottom wall portion 38 of the motor housing 9 or the rear end face of the axially end face portion of the drive motor 6. Thus, the motor 6 is resiliently supported by the motor engagement hole 46 of the antivibration spring 7 in the motor receiving hole 36 of the motor housing 9. The motor 6 is axially pressed by the antivibration spring 7 onto the metallic plate 44 that has the motor engagement hole 45, which supports the motor 6 from axially opposite side as the antivibration spring 7.

The radial supporting portion 51 is constructed of the multiple second resilient supporting pieces 61. The thrust supporting portion 52 is constructed of the multiple first resilient supporting pieces 62. The motor-engagement supporting portion 53 includes the multiple protrusions 55. The radial supporting portion 51, the thrust supporting portion 52 and the motor-engagement supporting portion 53 are integrally connected via the connecting portion 54 to be one piece of the antivibration spring 7 in the exhaust-gas recirculation apparatus in this embodiment. Vibration of the engine in both the radial direction of and the thrust direction of the motor 6 may be transferred to the valve housing 1 and the motor housing 9 that are integrally formed with each other. Even in this situation, the vibration of the motor 6 in the radial direction is damped by each first resilient supporting piece 61 of the radial supporting portion 51. Besides, the vibration of the motor 6 in the thrust direction is damped by each first resilient supporting piece 62 of the thrust supporting portion 52. Thus, vibration-proofing performance of the motor 6, which is held in the motor receiving hole 36 of the motor housing 9, can be significantly enhanced without increasing the number of the components and manufacturing process.

The diameter of the circle that circumscribes the circumferential outer peripheries of the second resilient supporting pieces 61 on the side of the connecting portion 54 (insertion side), i.e., on the side of the fixed end is set to be less than the inner diameter of the inner sidewall portion 35 of the motor housing 9. The diameter of the circle that circumscribes the circumferential outer peripheries of the second resilient supporting pieces 61 on the opposite side as the connecting portion 54, i.e., on the free end side is set to be greater than the inner diameter of the motor housing 9. Thus, the outer diameter of the radial supporting portion 51 on the side of the connecting portion 54 (insertion side), i.e., on the side of the fixed end is smaller than the inner diameter of the motor housing 9. That is, the radial supporting portion 51 is formed to be in a tapered shape, so that the motor 6, to which the antivibration spring 7 is attached, can be easily assembled into the motor receiving hole 36 of the motor housing 9.

The multiple second resilient supporting pieces 61 of the radial supporting portion 51 on the opposite side as the connecting portion 54, i.e., on the free end side is arranged on the outer circumferential periphery of the radially side face portion of the motor 6. Therefore, alignment of the multiple second resilient supporting pieces 61 of the radial supporting portion 51 can be visually confirmed from the motor insertion hole 37 of the motor housing 9, after the motor 6 and the antivibration spring 7 are assembled into the motor receiving hole 36 of the motor housing 9. Accordingly, misalignment of the motor 6 and the antivibration spring 7, which are inserted into the motor housing 9, can be easily detected. The connecting portion 54 is provided to the antivibration spring 7 to connect between the radial supporting portion 51 and the motor-engagement supporting portion 53. The protrusions 55 protrude from a substantially center portion of the connecting portion 54 of the antivibration spring 7 in the radial direction. The motor-engagement supporting portion 53 and the radial supporting portion 51 have the same center axial line, so that gripping force can be effectively applied for holding the motor 6 in the radial direction. The thrust supporting portion 52 extends from the relatively rigid connecting portion 54 to one side in the circumferential direction. The connecting portion 54 is arranged between the radial supporting portion 51 and the motor-engagement supporting portion 53 that have the same center axial line. Thus, sufficient gripping force can be maintained in the thrust direction.

### (Other Embodiment)

The flow control valve (exhaust gas recycle control valve, EGR control valve) controls an amount of exhaust recirculation gas (EGR amount) continuously or stepwisely corresponding to a condition of engine operation. The valve 3 of the EGR control valve is secured to the valve mounting portion 31 of the valve shaft 4 using a securing means such as welding in this embodiment. Alternatively, the valve 3 may be secured to the valve mounting portion 31 of the valve shaft 4 using a screw such as a tightening screw or a tightening bolt. The nozzle 2 fits to the inner circumferential periphery of the nozzle-fitting portion 27 of the valve housing 1 in this embodiment, and the nozzle 2 rotatably supports the valve 3 to be capable of opening and closing inside the nozzle 2. Alternatively, the valve 3 may be directly received in a substantially cylindrical valve receiving portion formed in the valve housing 1 such that the valve 3 is capable of opening and closing the valve receiving portion. In this structure, the number of components and manufacturing process can be reduced.

The above structure may be applied to a supporting device for an airflow control valve. In this structure, the fluid passage is used as the air intake passage, through which intake air is fed into cylinders of the engine. A valve body of the flow control valve is used to control a flow amount of the intake air that passes through the air intake passage. The housing is used as the motor housing that is integrally formed with the lateral side of the throttle body.

Alternatively, the above structure may be applied to a supporting device for a flow control valve that controls flow amount of fluid. The fluid may be gas or liquid such as water and oil. The above structure may be applied to a supporting device for TGV (tumble generation valve), in which swirl flow is generated in a cylinder of an engine. The above structure may be applied to an actuator supporting device for a door-lock device.

A wave washer, which is constructed of a wave-shaped radial supporting portion and a wave-shaped thrust supporting portion that are integrally formed, may be used as the plate-shaped resilient member.

Various modifications and alternations may be diversely made to the above embodiments without departing from the spirit of the present invention.

## Claims

1. A supporting device for an actuator (6) received in a housing (9), the actuator (6) operating a shaft (4) moving integrally with a valve body (3) of a flow control valve, the supporting device comprising:
a resilient member (7) that is formed in one piece, the resilient member (7) being insertable in a gap defined between the actuator (6) and the housing (9),
wherein the resilient member (7) includes a radial supporting portion (51) and is further including a thrust supporting portion (52),
the radial supporting portion (51) is adapted to resiliently support a radially side face portion of the actuator (6) in a radial direction,
the thrust supporting portion (52) is adapted to resiliently support an axially end face portion of the actuator (6) in an axial direction,
the radial supporting portion (51) and the thrust supporting portion (52) are integrally formed,
the resilient member (7) has an annular engagement portion (53) that engages with an outer circumferential periphery of the actuator (6),
the annular engagement portion (53) includes a plurality of protrusions (55) that are adapted to at least partially hold an outer circumferential periphery of the actuator (6),
each of the plurality of protrusions (55) protrudes from an inner circumferential periphery of the annular engagement portion (53) in a substantially radial direction of the actuator (6),
each of the plurality of protrusions (55) protrudes substantially along a centerline of the radial supporting portion (51),
**characterized in that**
the resilient member (7) has a connecting portion (54) that connects the thrust supporting portion (52) and the annular engagement portion (53),
the thrust supporting portion (52) has a fixed end portion on a side of the connecting portion (54),
the thrust supporting portion (52) has a free end portion that extends from the fixed end portion to at least one side in the substantially circumferential direction of the actuator (6),
the thrust supporting portion (52) includes a plurality of first resilient supporting pieces (62) that is capable of resiliently deforming in a substantially axial direction of the actuator (6),
each of the plurality of the first resilient supporting pieces (62) has a first contacting portion (62a) on a free end side of the first resilient supporting piece (62) such that the first contacting portion (62a) resiliently contacts with one of a bottom wall portion (38) of the housing (9) and the axially end face portion of the actuator (6),
a plurality of slit portions (57) is respectively formed between an outer circumferential periphery of the annular engagement portion (53) and each of the plurality of the first resilient supporting pieces (62), and
each of the plurality of slit portions (57) has an opening portion (57a) that separates the connecting portion (54) from the first contacting portion (62a) of each of the plurality of the first resilient supporting pieces (62).

2. The supporting device according to claim 1,
wherein the resilient member (7) includes a connecting portion (54) that connects the radial supporting portion (51) and the thrust supporting portion (52) with each other,
the radial supporting portion (51) is connected with an outer circumferential periphery of the connecting portion (54) via a fixed end portion,
the radial supporting portion (51) outwardly extends in a substantially radial direction of the actuator (6) such that the radial supporting portion (51) has plurality of free end portions on the opposite side as the fixed end portions in an axial direction of the actuator (6),
the fixed end portion is circumscribed by a circle that has a diameter, which is less than a diameter of an incircle of the housing (9), and
the free end portions are circumscribed by a circle that has a diameter, which is greater than the diameter of the incircle of the housing (9).

3. The supporting device according to claim 2,
wherein the housing (9) has an opening (37), through which the actuator (6) is inserted into the housing (9) along a substantially axial direction of the actuator (6), and
the connecting portion (54) is arranged on an opposite side as the opening (37) of the housing (9) with respect to the actuator (6) in a direction, in which the actuator (6) is inserted into the housing (9).

4. The supporting device according to claim 2, wherein the connecting portion (54) is arranged on the side of the axially end face portion of the actuator (6) in the axial direction of the actuator (6).

5. The supporting device according to claim 1, wherein the actuator (6) has a small-diameter protrusion (42) in the axially end face portion of the actuator (6),
the small-diameter protrusion (42) has a diameter smaller than a diameter of an axially intermediate portion of the actuator (6), and
the annular engagement portion (53) of the resilient member (7) engages with an outer circumferential periphery of the small-diameter protrusion (42) of the actuator (6).

6. The supporting device according to claim 1,
wherein the resilient member (7) has a connecting portion (54) that connects the radial supporting portion (51) and the annular engagement portion (53) with each other,
the radial supporting portion (51) has a fixed end portion on the side of the connecting portion (54), and
the radial supporting portion (51) has a free end portion that extends from the fixed end portion to at least one side in the axial direction of the actuator (6).

7. The supporting device according to any one of claims 1 to 6,
wherein the radial supporting portion (51) includes a plurality of second resilient supporting pieces (61) that is capable of resiliently deforming in a substantially radial direction of the actuator (6),
each of the plurality of the second resilient supporting pieces (61) has a second contacting portion (61a) on a free end side of the second resilient supporting piece (61) such that the second contacting portion (61a) resiliently contacts with one of an inner sidewall portion (35) of the housing (9) and the radially side face portion of the actuator.

8. The supporting device according to any one of claims 1 to 7,
wherein the housing (9) is integrally formed with a valve housing (1) that defines a fluid passage (25), which is opened and closed by the valve body (3) of the flow control valve,
the valve housing (9) defines a receiving hole (36) along a direction that is substantially perpendicular to a center axis of the fluid passage (25),
the receiving hole (36) has an opening end on one end side in a direction that is substantially perpendicular to the center axis of the fluid passage (25), and
the receiving hole (36) has a closed end on another end side in the direction that is substantially perpendicular to the center axis of the fluid passage (25).

## Patentansprüche

1. Stützvorrichtung für ein Stellglied (6), das in einem Gehäuse (9) aufgenommen ist, wobei das Stellglied (6) eine Welle (4) betätigt, die sich einstückig mit einem Ventilkörper (3) eines Strömungssteuerungsventils bewegt, wobei die Stützvorrichtung Folgendes aufweist:
ein elastisches Element (7), das aus einem Stück ausgebildet ist, wobei das elastische Element (7) in einen zwischen dem Stellglied (6) und dem Gehäuse (9) definierten Spalt einsetzbar ist,
wobei das elastische Element (7) einen Radialstützabschnitt (51) aufweist und ferner einen Achsschubstützabschnitt (52) aufweist,
wobei der Radialstützabschnitt (51) dazu angepasst ist, einen radialen Seitenflächenabschnitt des Stellglieds (6) in einer radialen Richtung elastisch zu stützen,
der Achsschubstützabschnitt (52) dazu angepasst ist, einen axialen Endflächenabschnitt des Stellglieds (6) in einer Achsrichtung elastisch zu stützen,
wobei der Radialstützabschnitt (51) und der Achsschubstützabschnitt (52) einstückig ausgebildet sind,
wobei das elastische Element (7) einen ringförmigen Eingriffsabschnitt (53) aufweist, der mit einem Außenumfangsbereich des Stellglieds (6) in Eingriff ist,
wobei der ringförmige Eingriffsabschnitt (53) eine Vielzahl von Vorsprüngen (55) aufweist, die dazu angepasst sind, einen Außenumfangsbereich des Stellglieds (6) zumindest teilweise zu halten,
wobei jeder der Vielzahl von Vorsprüngen (55) von einem Innenumfangsbereich des ringförmigen Eingriffsabschnitts (53) in einer im Wesentlichen radialen Richtung des Stellglieds (6) vorragt,
wobei jeder der Vielzahl von Vorsprüngen (55) im Wesentlichen entlang einer Mittellinie des Radialstützabschnitts (51) vorragt, **dadurch gekennzeichnet, dass**
das elastische Element (7) einen Verbindungsabschnitt (54) hat, der den Achsschubstützabschnitt (52) und den ringförmigen Eingriffsabschnitt (53) verbindet,
der Achsschubstützabschnitt (52) einen festen Endabschnitt an einer Seite des Verbindungsabschnitts (54) hat,
der Achsschubstützabschnitt (52) einen freien Endabschnitt hat, der sich von dem festen Endabschnitt zu zumindest einer Seite im Wesentlichen in der Umfangsrichtung des Stellglieds (6) erstreckt,
der Achsschubstützabschnitt (52) eine Vielzahl von ersten elastischen Stützstücken (62) aufweist, die in der Lage sind, sich im Wesentlichen in einer Achsrichtung des Stellglieds (6) elastisch zu verformen,
wobei jedes der Vielzahl der ersten elastischen Stützstücke (62) einen ersten Kontaktabschnitt (62a) an einer freien Endseite des ersten elastischen Stützstücks (62) aufweist, sodass der erste Kontaktabschnitt (62a) mit einem von einem Bodenwandabschnitt (38) des Gehäuses (9) und dem axialen Endflächenabschnitt des Stellglieds (6) elastisch in Kontakt ist,
eine Vielzahl von Schlitzabschnitten (57) jeweils zwischen einem Außenumfangsbereich des ringförmigen Eingriffsabschnitts (53) und jedem der Vielzahl von ersten elastischen Stützstücken (62) ausgebildet sind, und
jeder der Vielzahl von Schlitzabschnitten (57) einen Öffnungsabschnitt (57a) hat, der den Verbindungsabschnitt (54) von dem ersten Kontaktabschnitt (62a) eines jeden der Vielzahl von ersten elastischen Stützstücken (62) trennt.

2. Stützvorrichtung gemäß Anspruch 1,
wobei das elastische Element (7) einen Verbindungsabschnitt (54) aufweist, der den Radialstützabschnitt (51) und den Achsschubstützabschnitt (52) miteinander verbindet,
der Radialstützabschnitt (51) über einen festen Endabschnitt mit einem Außenumfangsbereich des Verbindungsabschnitts (54) verbunden ist,
der Radialstützabschnitt (51) sich im Wesentlichen in einer radialen Richtung des Stellglieds (6) derart nach außen erstreckt, dass der Radialstützabschnitt (51) eine Vielzahl von freien Endabschnitten an der entgegengesetzten Seite der festen Endabschnitte in einer Achsrichtung des Stellglieds (6) hat,
der feste Endabschnitt von einem Kreis umschrieben ist, der einen Durchmesser hat, der kleiner als ein Durchmesser eines eingeschriebenen Kreises des Gehäuses (9) ist, und
die freien Endabschnitte von einem Kreis umschrieben sind, der einen Durchmesser hat, der größer als der Durchmesser des eingeschriebenen Kreises des Gehäuses (9) ist.

3. Stützvorrichtung gemäß Anspruch 2,
wobei das Gehäuse (9) eine Öffnung (37) hat, durch die das Stellglied (6) in das Gehäuse (9) im Wesentlichen entlang einer axialen Richtung des Stellglieds (6) eingesetzt wird, und
der Verbindungsabschnitt (54) an einer entgegengesetzten Seite der Öffnung (37) des Gehäuses (9) mit Bezug auf das Stellglied (6) in einer Richtung, in der das Stellglied (6) in das Gehäuse (9) eingesetzt ist, angeordnet ist.

4. Stützvorrichtung gemäß Anspruch 2, wobei der Verbindungsabschnitt (54) an der Seite des axialen Endflächenabschnitts des Stellglieds (6) in der Achsrichtung des Stellglieds (6) angeordnet ist.

5. Stützvorrichtung gemäß Anspruch 1, wobei das Stellglied (6) einen kleindurchmessrigen Vorsprung (42) in dem Axialendflächenabschnitt des Stellglieds (6) hat,
der kleindurchmessrige Vorsprung (42) einen Durchmesser hat, der kleiner als ein Durchmesser eines in Achsrichtung mittleren Abschnitts des Stellglieds (6) hat, und
der ringartige Eingriffsabschnitt (53) des elastischen Elements (7) mit einem Außenumfangsrand des kleindurchmessrigen Vorsprungs (42) des Stellglieds (6) in Eingriff ist.

6. Stützvorrichtung gemäß Anspruch 1,
wobei das elastische Element (7) einen Verbindungsabschnitt (54) hat, der den Radialstützabschnitt (51) und den ringartigen Eingriffsabschnitt (53) miteinander verbindet,
der Radialstützabschnitt (51) einen festen Endabschnitt an der Seite des Verbindungsabschnitts (54) hat, und
der Radialstützabschnitt (51) einen freien Endabschnitt hat, der sich von dem festen Endabschnitt zu zumindest einer Seite in der Achsrichtung des Stellglieds (6) erstreckt.

7. Stützvorrichtung gemäß einem der Ansprüche 1 bis 6,
wobei der Radialstützabschnitt (51) eine Vielzahl von zweiten elastischen Stützstücken (61) aufweist, die in der Lage sind, sich im Wesentlichen in einer Radialrichtung des Stellglieds (6) elastisch zu verformen,
wobei jedes der Vielzahl der zweiten elastischen Stützstücke (61) einen zweiten Kontaktabschnitt (61a) an einer freien Endseite des zweiten elastischen Stützstücks (61) hat, sodass der zweite Kontaktabschnitt (61a) mit einem von einem Innenseitenwandabschnitt (35) des Gehäuses (9) und einem Radialseitenflächenabschnitt des Stellglieds elastisch in Kontakt ist.

8. Stützvorrichtung gemäß einem der Ansprüche 1 bis 7,
wobei das Gehäuse (9) einstückig mit einem Ventilgehäuse (1) ausgebildet ist, das einen Fluiddurchlass (25) definiert, der durch den Ventilkörper (3) des Strömungssteuerventils geöffnet und geschlossen wird,
das Ventilgehäuse (9) ein Aufnahmeloch (36) entlang einer Richtung definiert, die im Wesentlichen senkrecht zu einer Mittelachse des Fluiddurchlasses (25) verläuft,
das Aufnahmeloch (36) ein offenes Ende an einer Endseite in einer Richtung hat, die im Wesentlichen senkrecht zu der Mittelachse des Fluiddurchlasses (25) verläuft, und
das Aufnahmeloch (36) ein geschlossenes Ende an einer anderen Endseite in der Richtung hat, die im Wesentlichen senkrecht zu der Mittelachse des Fluiddurchlasses (25) verläuft.

## Revendications

1. Dispositif de support pour un actionneur (6) reçu dans un boîtier (9), l'actionneur (6) actionnant une tige (4) se déplaçant d'un seul tenant avec un corps de soupape (3) d'une soupape de régulation de débit, le dispositif de support comprenant :
un élément élastique (7) qui est formé de façon monobloc, l'élément élastique (7) étant insérable dans un espace défini entre l'actionneur (6) et le boîtier (9),
dans lequel l'élément élastique (7) comprend une partie de support radiale (51) et comprend en outre une partie de support de poussée (52),
la partie de support radiale (51) est adaptée pour supporter élastiquement une partie de face radialement latérale de l'actionneur (6) dans une direction radiale,
la partie de support de poussée (52) est adaptée pour supporter élastiquement une partie de face axialement terminale de l'actionneur (6) dans une direction axiale,
la partie de support radiale (51) et la partie de support de poussée (52) sont formées d'un seul tenant,
l'élément élastique (7) comporte une partie de coopération annulaire (53) qui coopère avec une périphérie circonférentielle extérieure de l'actionneur (6),
la partie de coopération annulaire (53) comprend une pluralité de protubérances (55) qui sont adaptées pour retenir au moins partiellement une périphérie circonférentielle extérieure de l'actionneur (6),
chacune parmi la pluralité de protubérances (55) fait saillie à partir d'une périphérie circonférentielle intérieure de la partie de coopération annulaire (53) dans une direction sensiblement radiale de l'actionneur (6),
chacune parmi la pluralité de protubérances (55) fait saillie sensiblement suivantune ligne centrale de la partie de support radiale (51),
**caractérisé en ce que**
l'élément élastique (7) comporte une partie de raccordement (54) qui raccorde la partie de support de poussée (52) et la partie de coopération annulaire (53),
la partie de support de poussée (52) comporte une partie terminale fixe sur un côté de la partie de raccordement (54),
la partie de support de poussée (52) comporte une partie terminale libre qui s'étend de la partie terminale fixe à au moins un côté dans la direction sensiblement circonférentielle de l'actionneur (6),
la partie de support de poussée (52) comprend une pluralité de premières pièces de support élastiques (62) qui est capable de se déformer élastiquement dans une direction sensiblement axiale de l'actionneur (6),
chacune parmi la pluralité des premières pièces de support élastiques (62) comporte une première partie de contact (62a) sur un côté terminal libre de la première pièce de support élastique (62) de sorte que la première partie de contact (62a) entre en contact élastiquement avec une d'une partie de paroi inférieure (38) du boîtier (9) et
de la partie de face axialement terminale de l'actionneur (6),
une pluralité de parties en fentes (57) est respectivement formée entre une périphérie circonférentielle extérieure de la partie de coopération annulaire (53) et chacune parmi la pluralité des premières pièces de support élastiques (62), et
chacune parmi la pluralité de parties en fentes (57) comporte une partie d'ouverture (57a) qui sépare la partie de raccordement (54) de la première partie de contact (62a) de chacune parmi la pluralité des premières pièces de support élastiques (62).

2. Dispositif de support selon la revendication 1,
dans lequel l'élément élastique (7) comprend une partie de raccordement (54) qui raccorde la partie de support radiale (51) et la partie de support de poussée (52) l'une avec l'autre,
la partie de support radiale (51) est raccordée avec une périphérie circonférentielle extérieure de la partie de raccordement (54) par l'intermédiaire d'une partie terminale fixe,
la partie de support radiale (51) s'étend vers l'extérieur dans une direction sensiblement radiale de l'actionneur (6) de sorte que la partie de support radiale (51) comporte une pluralité de parties terminales libres sur le côté opposé aux parties terminales fixes dans une direction axiale de l'actionneur (6),
la partie terminale fixe est encerclée par un cercle qui possède un diamètre, qui est inférieur à un diamètre d'un cercle intérieur du boîtier (9), et
les parties terminales libres sont encerclées par un cercle qui possède un diamètre, qui est supérieur au diamètre du cercle intérieur du boîtier (9).

3. Dispositif de support selon la revendication 2,
dans lequel le boîtier (9) comporte une ouverture (37), à travers laquelle l'actionneur (6) est inséré dans le boîtier (9) le long d'une direction sensiblement axiale de l'actionneur (6), et
la partie de raccordement (54) est agencée sur un côté opposé à l'ouverture (37) du boîtier (9) par rapport à l'actionneur (6) dans un sens dans lequel l'actionneur (6) est inséré dans le boîtier (9).

4. Dispositif de support selon la revendication 2, dans lequel la partie de raccordement (54) est agencée sur le côté de la partie de face axialement terminale de l'actionneur (6) dans la direction axiale de l'actionneur (6).

5. Dispositif de support selon la revendication 1, dans lequel l'actionneur (6) comporte une protubérance de petit diamètre (42) dans la partie de face axialement terminale de l'actionneur (6),
la protubérance de petit diamètre (42) possède un diamètre inférieur à un diamètre d'une partie axialement intermédiaire de l'actionneur (6), et
la partie de coopération annulaire (53) de l'élément élastique (7) coopère avec une périphérie circonférentielle extérieure de la protubérance de petit diamètre (42) de l'actionneur (6).

6. Dispositif de support selon la revendication 1,
dans lequel l'élément élastique (7) comporte une partie de raccordement (54) qui raccorde la partie de support radiale (51) et la partie de coopération annulaire (53) l'une avec l'autre,
la partie de support radiale (51) comporte une partie terminale fixe sur le côté de la partie de raccordement (54), et
la partie de support radiale (51) comporte une partie terminale libre qui s'étend de la partie terminale fixe à au moins un côté dans la direction axiale de l'actionneur (6).

7. Dispositif de support selon une quelconque des revendications 1 à 6,
dans lequel la partie de support radiale (51) comprend une pluralité de secondes pièces de support élastiques (61) qui est capable de se déformer élastiquement dans une direction sensiblement radiale de l'actionneur (6),
chacune parmi la pluralité des secondes pièces de support élastique (61) comporte une seconde partie de contact (61 a) sur un côté terminal libre de la seconde pièce de support élastique (61) de sorte que la seconde partie de contact (61a) entre en contact élastiquement avec une d'une partie de paroi latérale intérieure (35) du boîtier (9) et de la partie de face radialement latérale de l'actionneur,

8. Dispositif de support selon une quelconque des revendications 1 à 7,
dans lequel le boîtier (9) est formé d'un seul tenant avec un boîtier de soupape (1) qui définit un passage à fluide (25), qui est ouvert et fermé par le corps de soupape (3) de la soupape de régulation de débit,
le boîtier de soupape (9) définit un trou de réception (36) le long d'une direction qui est sensiblement perpendiculaire à un axe central du passage à fluide (25),
le trou de réception (36) comporte une extrémité ouverte sur un côté terminal dans une direction qui est sensiblement perpendiculaire à l'axe central du passage à fluide (25), et
le trou de réception (36) comporte une extrémité fermée sur un autre côté terminal dans la direction qui est sensiblement perpendiculaire à l'axe central du passage à fluide (25).
